Europäisches Patentamt

European Patent Office

Office européen des brevets

(19)

(11) Numéro de publication : **0 237 367**
**B1**

(12) **FASCICULE DE BREVET EUROPÉEN**

(45) Date de publication du fascicule du brevet :
**19.07.89**

(51) Int. Cl.⁴ : **F 16 C 25/08**, F 16 C 33/64

(21) Numéro de dépôt : **87400166.2**

(22) Date de dépôt : **23.01.87**

(54) **Roulement à billes à précontrainte et procédé et outil pour sa fabrication.**

(30) Priorité : **07.02.86 FR 8601718**

(43) Date de publication de la demande :
**16.09.87 Bulletin 87/38**

(45) Mention de la délivrance du brevet :
**19.07.89 Bulletin 89/29**

(84) Etats contractants désignés :
**DE ES GB IT SE**

(56) Documents cités :
**EP-A- 0 042 325**
**WO-A-82 /022 31**
**DE-A- 2 209 454**
**DE-C- 699 117**
**FR-A- 2 069 549**
**FR-A- 2 069 550**
**US-A- 1 695 230**
**US-A- 3 876 266**

(73) Titulaire : **NADELLA**
**61 route de Foecy**
**F-18101 Vierzon (FR)**

(72) Inventeur : **Stephan, Gérard**
**41, avenue de Verdun**
**F-78290 Croissy (FR)**

(74) Mandataire : **Polus, Camille et al**
**c/o Cabinet Lavoix 2, Place d'Estienne d'Orves**
**F-75441 Paris Cedex 09 (FR)**

EP 0 237 367 B1

Jouve, 18, rue St-Denis, 75001 Paris, France

## Description

La présente invention concerne les roulements à billes et, plus particulièrement les roulements à billes à précontrainte initiale.

On a déjà proposé de fabriquer des roulements à billes à précontrainte utilisant des pièces élastiques pour rattraper automatiquement les jeux et, en même temps, amortir les vibrations auxquelles les roulements à billes sont soumis et qu'ils risquent de transmettre.

Dans la demande de brevet français FR-A-2 549 174, la Demanderesse a décrit un roulement précontraint à deux séries d'éléments de roulement. Les éléments de roulement utilisés sont des rouleaux ou des billes disposés selon deux rangées distinctes de manière à assurer un maintien radial et axial tout en assurant un amortissement des vibrations et en étant exempt de jeu.

Ce roulement dont on connaît les avantages présente l'inconvénient d'être encombrant dans son sens axial.

Le document EP-A-0 042 325 concerne aussi un roulement précontraint. La solution proposée comprend un boîtier, une bague extérieure en deux parties logées dans ce boîtier, une bague intérieure, des billes placées entre ces deux bagues et suivant quatre pistes circulaires dont deux sont situées sur la bague intérieure et deux sur la bague extérieure et une pièce élastique comprimée dans ce boîtier pour presser les billes sur leurs pistes.

Ce roulement présente des inconvénients notamment de centrage de la bague en deux parties.

Pour fabriquer les bagues de roulement on a déjà proposé d'utiliser des douilles ou anneaux en tôle métallique. Le document FR-A-2 069 550 propose de faire des gorges où circulent les billes par déformation de telles douilles pour leur donner un profil en V résultant d'un pli d'accordéon en W inversé.

L'invention vise à remédier aux inconvénients précités grâce au roulement suivant l'invention qui, tout en étant plus ramassé, conserve les qualités précédentes.

L'invention a pour objets un roulement à billes, un procédé de fabrication d'une bague de ce roulement et un outil pour la mise en œuvre de ce procédé.

Le roulement à précontrainte suivant l'invention est du type de celui exposé dans le préambule de la revendication 1 qui tient compte de la demande de brevet européen indiquée. Les particularités de ce roulement ressortent notamment de la partie caractérisante de cette revendication 1.

Le procédé de fabrication suivant l'invention d'une bague de roulement à billes est du type de celui exposé dans le préambule de la revendication 8 qui tient compte de la demande de brevet français indiquée en dernier lieu. Les particularités de ce procédé ressortent notamment de la partie caractérisante de cette revendication.

L'invention a aussi pour objet un outil pour la mise en œuvre du procédé que l'on vient d'indiquer utilisé pour le surfaçage notamment de deux pistes de roulement que décrivent les points de contact des billes d'un roulement sur sa bague et qui sont situées sur les flancs qui se font face d'une gorge dont le profil de la section droite ressemble à un V. Cet outil est caractérisé en ce qu'il comprend au moins deux éléments mobiles qui lorsqu'ils sont joints délimitent un orifice central circulaire, en ce qu'une section droite par un plan méridien présente un profil convexe destiné à coopérer avec les flancs pour les surfacer dans la zone des pistes et en ce que sur chacun des éléments mobiles se trouve à proximité du plan de joints une protubérance saillant vers le centre sur la partie du profil destinée à surfacer la zone des pistes.

D'autres caractéristiques de l'invention ressortiront de la lecture de la description qui suit et de l'examen du dessin où :

— la Fig. 1 représente une section droite méridienne partielle d'un mode de réalisation d'un roulement à billes à quatre pistes de contact suivant l'invention ;

— la Fig. 2 est une vue de détail représentant l'une des bagues obtenue par le procédé selon l'invention ;

— la Fig. 3 est une vue en perspective cavalière partielle représentant une bague obtenue suivant le procédé de l'invention à l'aide d'un outil conforme à l'invention et montrant l'une des dépressions d'une piste ;

— la Fig. 4 est une section méridienne partielle montrant la manière dont l'outil surface les pistes d'une bague conformément à l'invention ;

— la Fig. 5 est une section droite partielle développée par un plan normal à la piste de contact montrant les profils d'une piste et de l'outil pour l'obtenir à proximité des plans d'assemblage lors de leur jonction ;

— la Fig. 6 est une vue schématique montrant la manière dont les éléments de l'outil conforme à l'invention sont réunis pour surfacer les pistes de roulement ;

— la Fig. 7 est une vue partielle de détail montrant une variante d'exécution de la bague en deux parties coulissant l'une dans l'autre ; et

— la Fig. 8 est une section droite partielle, par un plan méridien, d'une variante d'exécution d'une bague obtenue selon l'invention.

Le roulement à billes selon l'invention présente la particularité d'être « auto-aligneur » c'est-à-dire d'accepter un certain défaut de centrage et d'être aussi auto-adaptatif de la précontrainte à laquelle il est soumis. Ce roulement à billes présente aussi un avantage particulièrement intéressant en ce que sa dimension, mesurée parallèlement à son axe de rotation, est notamment diminuée par rapport à celle des roulements à aiguilles ou rouleaux. Le gain de place ainsi obtenu permet de loger le roulement selon l'invention dans des montages où les problèmes d'encombrement sont des paramètres critiques.

Le roulement à billes selon l'invention a aussi comme avantage de ne pas présenter de jeu et de posséder l'aptitude d'absorber les vibrations auxquelles il est soumis.

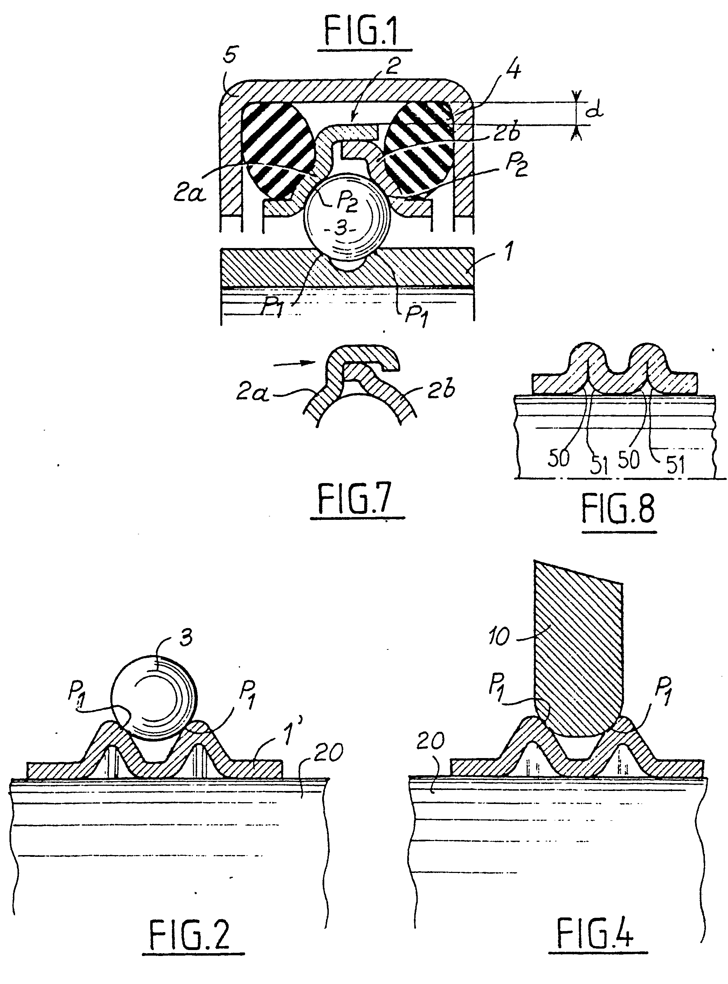

Comme on le voit sur la Fig. 1, le roulement à billes selon l'invention comprend une bague intérieure 1 et une bague extérieure 2 entre lesquelles sont logées des billes 3. Le roulement comprend aussi un boîtier 5 dans lequel sont logés deux tores en élastomère qui sont soumis à une précontrainte au montage et qui transmettent leur charge à la bague extérieure 2.

Comme on le voit clairement sur la Fig. 1, selon une caractéristique de l'invention chaque bille 3 présente deux points de contact $P_1$ avec la bague 1 et deux poins de contact $P_2$ avec la bague 2.

Comme on le voit aussi sur la Fig. 1, l'une des bagues, dans ce monde de réalisation la bague extérieure, est constituée de deux parties 2a et 2b qui sont emboîtées mobiles l'une dans l'autre de manière à pouvoir se déplacer librement l'une par rapport à l'autre et ainsi transmettre la précontrainte des tores élastiques 4 aux billes. En examinant le dessin on comprend aisément que, grâce à la disposition adoptée, le roulement à billes suivant l'invention est auto-aligneur et auto-adaptatif des contraintes et qu'il assure le rattrapage automatique du jeu.

Le roulement selon l'invention présente encore une autre caractéristique, celle de posséder une aptitude limitée au désaxage ou désalignement.

Pour certaines applications, le roulement est soumis à une charge radiale non uniforme qui produit un déplacement relatif de la bague extérieure 2 par rapport à son logement, c'est-à-dire par rapport à son boîtier 5. Ce déplacement introduit un désaxage ou désalignement qui peut être préjudiciable à un bon fonctionnement si sa valeur n'est pas limitée. Pour remédier à un tel inconvénient on donne au diamètre extérieur de la bague 2 et au diamètre intérieur du boîtier 5 des dimensions qui ménagent un intervalle d (Fig. 1) qui fixe l'amplitude maximale du désalignement tolérable. En effet, sous l'action de la résultante radiale la bague extérieure se désaxera, et l'amplitude du déplacement fonction de l'intensité de la résultante sera limitée par la rencontre de la bague avec le boîtier.

Selon une autre caractéristique de l'invention, l'une des bagues, dans le mode de réalisation dessiné la bague intérieure, peut être réalisée directement à partir d'une tôle ou d'un tube qui est soumis à une opération de formage. Sur la Fig. 2, on voit que la bague intérieure 1' à un profil en W inversé, en forme de pli d'accordéon dont les deux flancs qui se font face du V portent les pistes de roulement pour les billes décrites par leurs points de contact $P_1$. Il est clair, que lors de leur trajectoire, les points de contact $P_1$ des billes sur les flancs de la bague intérieure décrivent des cercles.

Pour obtenir une bonne portée et donc un meilleur roulement des billes sur les bagues, il est classique que les zones des bagues où sont situées les pistes de roulement des billes soient reprises par exemple par usinage ou galettage mais ce type d'opérations est long et coûteux.

L'un des buts de l'invention est de s'affranchir de cette reprise d'usinage.

Selon l'invention pour obtenir le surfaçage, afin que le roulement soit bon, des zones des flancs qui se font face de la gorge en V du pli d'accordéon en W inversé on frappe ou presse simultanément toute la circonférence et on ménage lors de la frappe des dépressions en retrait réparties le long de la circonférence des pistes, toutes ces opérations se faisant sans enlèvement de matière.

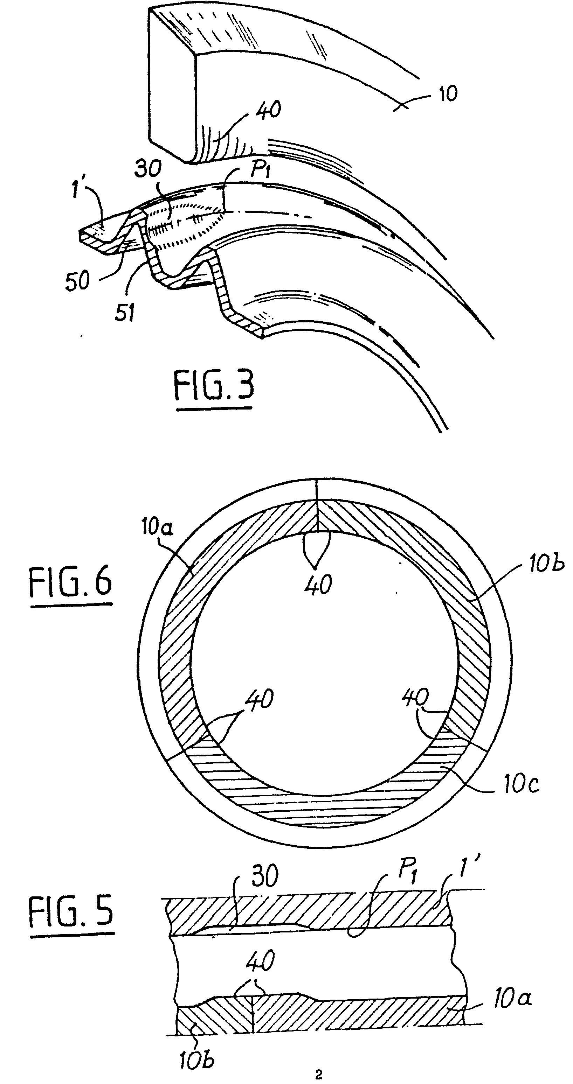

Comme on le voit schématiquement sur la représentation partielle de la Fig. 3, on utilise un outil 10 qui se présente sous la forme de trois éléments ou « mors » 10a, 10b et 10c (Fig. 6) disposés à la manière d'un mandrin pour délimiter lorsqu'ils sont joints un orifice central circulaire. Il est clair que le nombre de trois n'est indiqué qu'à titre d'exemple. Ces mors sont placés dans une presse et lorsqu'ils sont appliqués, sous l'effet de forces centripètes, les trois mors 10a, 10b, 10c viennent au contact et pressent contre les flancs pour tracer les pistes que suivront les billes d'un roulement, comme il apparaît clairement en examinant la section méridienne partielle de la Fig. 4. Dans le mode d'exécution représenté on façonne de la sorte les pistes de la bague intérieure. Les pistes sont ainsi brunies, glacées et le métal écroui.

De manière à ne pas déformer la bague lors de la frappe de cette dernière par les mors, on place à l'intérieur de celle-ci un arbre 20 (Fig. 2 et 4) qui absorbera une partie des efforts. Il est clair que l'on peut utiliser toute autre technique assurant le même rôle.

Si l'on procède comme on vient de l'indiquer, on constate qu'au niveau des plans de joints des trois mors qui constituent l'outil 10 apparaissent des marques, par exemple sous forme de petits bourrelets ou analogues, par suite du fluage de la matière. Il est clair que de tels petits bourrelets constituent des irrégularités sur les pistes que suivent les billes et qu'elles provoquent des ressauts à chaque passage d'une bille. Ces irrégularités au roulement sont préjudiciables à un bon fonctionnement et de plus sont génératrices de vibrations et accélèrent l'usure. C'est pourquoi ce type de défaut est rédhibitoire et si l'on ne procédait pas d'une manière différente, la technique que l'on vient de rappeler ne conviendrait pas à elle seule pour fabriquer des roulements convenant à la majorité des utilisations.

Pour éliminer ces défauts que présentent les pistes et qui sont nuisibles à un bon fonctionnement, on fait en sorte, selon l'invention, que les pistes de roulement que l'on vient de façonner exposent non pas des saillies mais des dépressions à proximité des plans de jonction des trois mors 10a, 10b, 10c de l'outil 10. Ceci est une des caractéristiques de l'invention. Comme on le voit notamment sur la Fig. 3, on ménage des protubérances 40 saillantes sur chacun des mors de l'outil, à proximité de ses plans de joint et dans les zones qui contribueront à la formation, au façonnage des pistes circulaires que suivront les billes. Sur cette figure partielle seule une des protubérances est visible.

En examinant la Fig. 5, on comprend la manière dont les outils 10a et 10b opèrent. Comme on le voit notamment sur la Fig. 5, les pistes ainsi façonnées présentent un creux ou dégagement, une dépression 30. Du fait de cette structure les billes ne sont plus précontraintes lorsqu'elles défilent dans ces zones et les défauts éventuels de la piste ne nuisent plus au bon fonctionnement du roulement. On voit donc tout l'intérêt du procédé selon l'invention et celui de l'outil spécialement conçu pour sa mise en œuvre.

Il est clair que les modes de réalisation des trois objets de l'invention ont été décrits à propos du façonnage de la bague intérieure. Mais rien ne s'oppose à ce que la même technique, après adaptations nécessaires, soit utilisée pour la confection de la bague extérieure du roulement selon l'invention.

Sur la Fig. 7, on a dessiné une vue partielle des parties de la bague qui coulissent librement l'une dans l'autre. Dans ce mode de réalisation on voit clairement que le bord de la partie 2a se termine par un bec obtenu par sertissage ou par roulage, par exemple, de manière à limiter l'amplitude de l'extension possible des deux éléments l'un par rapport à l'autre et, aussi, de manière à les rendre inséparables.

La Fig. 8 illustre une variante d'exécution d'une bague obtenue selon l'invention. L'opération de formage de la bague 1″ a été conduite de manière que les faces intérieures en regard 50 et 51 des chevrons contigüs du profil en W inversé soient appliquées au contact l'une de l'autre. On obtient ainsi la plus grande rigidité possible et, pour une longueur totale donnée, la plus grande portée sur l'arbre.

Il est clair que les figures du dessin sont des illustrations schématiques et que ce qu'elles représentent n'est pas tracé à l'échelle car seulement destiné à faire comprendre l'invention.

L'invention trouve application notamment dans l'industrie automobile.

**Revendications**

1. Roulement précontraint comprenant un boîtier (5), une bague intérieure (1), une bague extérieure (2), des éléments de roulement (3) placés entre les bagues intérieures (1) et extérieure (2), au moins une pièce élastique (4) comprimée dans le boîtier (5) entre ce dernier et l'une des bagues (1, 2) pour appliquer les éléments de roulement (3) au contact des bagues intérieure (1) et extérieure (2) suivant les pistes circulaires (P₁, P₂), où les éléments de roulement sont des billes, où chaque élément de roulement suit quatre pistes de contact dont deux (P₁) situées sur la bague intérieure (1) et deux (P₂) sur la bague extérieure (2), et où l'une des bagues est constituée de deux parties (2a, 2b) sur chacune desquelles se situe l'une des pistes de contact (P₂) caractérisé en ce que ces deux parties (2a, 2b) sont emboîtées axialement et mobiles librement l'une dans l'autre pour transmettre la précontrainte de la pièce élastique (4) aux billes (3) et en ce que des dépressions (30) en retrait sont présentes sur les pistes de roulement pour permettre de soustraire localement les billes à la précontrainte.

2. Roulement conforme à la revendication 1, caractérisé en ce que l'emboîtement mobile des deux parties (2a, 2b) qui constituent l'une des bagues est obtenu par un coulissement cylindrique axial.

3. Roulement conforme à l'une des revendications 1 ou 2, caractérisé en ce que l'une (2a) des parties qui constitue l'une (2) des bagues est munie d'un rebord qui limite vers l'extérieur l'amplitude du déplacement relatif d'une des parties (2a, 2b) par rapport à l'autre.

4. Roulement conforme à l'une quelconque des revendications 1 à 3, caractérisé en ce que celle (2) des bagues (1, 2) qui est constituée de deux parties (2a, 2b) est la bague extérieure.

5. Roulement conforme à l'une quelconque des revendications 1 à 3, caractérisé en ce que celle des bagues (1, 2) qui est constituée de deux parties est la bague intérieure.

6. Roulement conforme à l'une quelconque des revendications 1 à 5, caractérisé en ce que celle (1′) des bagues (1, 2) qui n'est pas constituée en deux parties a une section droite méridienne en pli d'accordéon en W inversé et en ce que les faces en regard des chevrons contigüs sont appliquées au contact l'une de l'autre.

7. Roulement conforme à l'une quelconque des revendications 1 à 6, caractérisé en ce qu'un intervalle (d) de valeur prédéterminé est ménagé entre le diamètre extérieur de la bague extérieure (2) et le diamètre intérieur du boîtier (5).

8. Procédé de fabrication d'une bague de roulement à billes présentant deux pistes de roulement que décrivent les points de contact des billes et qui sont ménagées sur des flancs qui se font face d'une gorge dont le profil de la section droite ressemble à un V résultant d'un pli d'accordéon en W inversé obtenu par formage d'une tôle ou d'un tube, caractérisé en ce qu'on surface les zones des flancs qui se font face de la gorge en V du pli d'accordéon en W inversé par frappe, pressage simultané sur toute la circonférence, en ce qu'on ménage lors de la frappe-pressage des dépressions en retrait réparties le long de la circonférence des pises, toutes ces opérations se faisant sans enlèvement de matière.

9. Procédé conforme à la revendication 8, caractérisé en ce qu'on conduit le formage du pli d'accordéon en W inversé de manière à appliquer au contact les faces en regard (50, 51) des chevrons contigus.

10. Outil (10) pour la fabrication notamment de deux pistes de roulement que décrivent les points de contact des billes d'un roulement sur sa bague et qui sont situées sur les flancs qui se font face d'une gorge dont le profil de la section droite ressemble à un V, caractérisé en ce qu'il comprend au moins deux éléments mobiles (10a, 10b, 10c) qui lorsqu'ils sont joint délimitent un orifice circulaire, en ce qu'une section droite par un plan méridien présente un profil convexe destiné à coopérer avec les flancs pour les surfacer dans la zone des pistes et en ce que sur chacun de éléments mobiles se trouve à proximité du plan de joint une protubérance (40) saillant vers le centre sur la partie du profil destinée à surfacer la zone des pistes.

## Claims

1. Prestressed rolling bearing comprising a housing (5), an inner ring (1), an outer ring (2), rolling elements (3) located between the inner ring (1) and the outer ring (2), at least one elastic part (4) compressed inside the housing (5) between the latter and one of the rings (1, 2) so as to apply the rolling elements (3) against the inner ring (1) and the outer ring (2) along circular tracks $(P_1, P_2)$, where the rolling elements are balls, where each rolling elements follows four contact tracks, two of which $(P_1)$ located on the inner ring (1) and two of which $(P_2)$ are located on the outer ring (2), and where one of the rings consists of two parts (2a, 2b) on each of which one of the contact tracks $(P_2)$ is located, characterized in that these two parts (2a, 2b) are fitted together axially and movable freely one inside the other so as to transmit the prestressing of the elastic part (4) to the balls (3) and in that recessed depression (30) are present on the rolling tracks so that the balls may not be subjected locally to prestressing.

2. Rolling bearing according to Claim 1, characterized in that the movable fitting together of the two parts (2a, 2b) which form one of the rings is obtained by means of axial cylindrical sliding.

3. Rolling bearing according to one of Claims 1 or 2, characterized in that one (2a) of the parts which forms one (2) of the rings is provided with a shoulder which limits towards the outside the amplitude of relative displacement of one of the parts (2a, 2b) relative to the other.

4. Rolling bearing according to any one of Claims 1 to 3, characterized in that the ring (2) of the rings (1, 2) which consists of two parts (2a, 2b) is the outer ring.

5. Rolling bearing according to any one of Claims 1 to 3, characterized in that the ring of the rings (1, 2) which consists of two parts is the inner ring.

6. Rolling bearing according to any one of Claims 1 to 5, characterized in that the ring (1') of the rings (1, 2) which does not consist of two parts has an accordion-pleated meridian cross-section in the shape of an inverted W and in that the opposite faces of the contiguous chevrons are applied so as to make contact with each other.

7. Rolling bearing according to any one of Claims 1 to 6, characterized in that a gap (d) of predetermined value is provided between the outer diameter of the outer ring (2) and the inner diameter of the housing (5).

8. Method of manufacturing a ball bearing ring having two rolling tracks which describe the contact points of the balls and which are provided on the opposing flanks of a groove, the cross-sectional profile of which resembles a V resulting from an accordion pleat in the shape of an inverted W obtained by forming a metal sheet or a tube, characterized in that the zones of the opposing flanks of the V-shaped groove of the accordion pleat in the shape of an inverted W are surfaced by means of stamping, simultaneous pressing over the entire circumference, in that, during stamping/pressing, recessed depressions distributed along the circumference of the tracks are formed, all these operations being performed without the removal of material.

9. Method according to Claim 8, characterized in that forming of the accordion pleat in the shape of an inverted W is carried out so as to apply the opposite faces (50, 51) of the contiguous chevrons against each other.

10. Tool (10) for the manufacture in particular of two rolling tracks which describe the contact points of the balls of a rolling bearing on its ring an which are located on the opposing flanks of a groove, the cross-sectional profile of which resembles a V, characterized in that it comprises at least two movable elements (10a, 10b, 10c) which when they are joined define a circular orifice, in that a cross-section through a meridian plane has a convex profile intended to cooperate with the flanks in order to surface them in the zone of the tracks and in that on each of the movable elements there is located in the vicinity of the joining plane a protuberance (40) projecting towards the centre on the part of the profile intended to surface the zone of the tracks.

## Patentansprüche

1. Vorgespanntes Lager mit einem Gehäuse (5), mit einem Innenring (1), mit einem Außenring (2), mit zwischen dem Innenring (1) und dem Außenring (2) angeordneten Lagerelementen (3), mit mindestens einem in dem Gehäuse (5) zwischen dem letzteren und einem der Ringe (1, 2) zusammengedrückten elastischen Teil (4), um die Lagerelemente (3) mit dem Innenring (1) und dem Außenring (2) entlang von kreisförmigen Bahnen $(P_1, P_2)$ in Berührung zu bringen, wenn die Lagerelemente Kugeln sind, wobei jedes Lagerelement vier Berührungsbahnen folgt, von denen zwei $(P_1)$ auf dem Innenring (1) und zwei $(P_2)$ auf dem Außenring (2) angeordnet sind, und wobei einer der Ringe durch zwei Teile (2a, 2b) dargestellt wird, auf jedem derselben sich eine der Berührungsbahnen $(P_2)$ befindet, dadurch gekennzeichnet, daß diese beiden Teile (2a, 2b) axial ineinandergefügt und das eine in dem anderen frei beweglich sind, um die Vorspannung des elastischen Teiles (4) auf die Kugeln (3) zu übertragen, und daß zurückspringende Vertiefungen (30) auf den Lagerbahnen vorgesehen sind, um die Kugeln örtliche vor der Vorspannung zu bewahren.

2. Lager nach Anspruch 1, dadurch gekennzeichnet, daß das bewegliche Ineinandergreifen der beiden Teile (2a, 2b), die einen der Ringe darstellen, durch eine axial zylindrische Gleitbahn erreicht wird.

3. Lager nach einem der Ansprüche 1 oder 2, dadurch gekennzeichnet, daß eins (2a) der Teile, das einen (2) der Ringe darstellt, einen nach außen umgebogenen Rand aufweist, der die Amplitude der relativen Verschiebung eines der Teile (2a, 2b) gegenüber dem anderen begrenzt.

4. Lager nach irgendeinem der Ansprüche 1 bis 3, dadurch gekennzeichnet, daß derjenige (2) der Ringe (1, 2), der durch beide Teile (2a, 2b) dargestellt wird, der Außenring ist.

5. Lager nach irgendeinem der Ansprüche 1 bis 3, dadurch gekennzeichnet, daß derjenige der Ringe (1, 2), der durch beide Teile dargestellt wird, der Innenring ist.

6. Lager nach irgendeinem der Ansprüche 1 bis 5, dadurch gekennzeichnet, daß derjenige (1') der Ringe (1, 2), der nicht in zwei Teilen dargestellt wird, in seiner Mittelebene einen Querschnitt in Form einer Ziehharmonika in Form eines umgekehrten W aufweist und daß die Vorderseiten in bezug auf aneinander angrenzende Winkel miteinander in Berührung gebracht werden.

7. Lager nach irgendeinem der Ansprüche 1 bis 6, dadurch gekennzeichnet, daß eine Strecke (d) von vorgegebener Größe zwischen dem Außendurchmesser des Außenringes (2) und dem Innendurchmesser des Gehäuses (5) vorgesehen ist.

8. Verfahren zum Herstellen eines zwei Lagerbahnen darstellenden Kugellagerringes, wobei die Lagerbahnen die Berührungspunkte der Kugeln beschreiben und auf Flanken ausgebildet sind, die sich unter Bildung einer Rille gegenüberliegen, deren Profil im Querschnitt einem V ähnlich ist, das sich aus einer durch Verformung eines Stahlbleches oder eines Rohres erzielten Ziehharmonikaform in Gestalt eines umgekehrten W ergibt, dadurch gekennzeichnet, daß man die Flankengebiete, die sich unter Bildung der Rille in Form des V in Form einer Ziehharmonika und eines umgekehrten W darstellen, durch Drücken und gleichzeitiges Pressen auf dem gesamten Umfang oberflächenbearbeitet und daß man beim Druckpressen entlang des Umfanges der Bahnen verteilte zurückspringende Vertiefungen vorsieht, wobei diese Vorgänge sämtlich ohne Materialabnahme erfolgen.

9. Verfahren nach Anspruch 8, dadurch gekennzeichnet, daß man die Bildung der Ziehharmonikafalte in Form eines umgekehrten W derart ausführt, daß man die sich gegenüberliegenden Seiten (50, 51) miteinander in Berührung bringt.

10. Werkzeug (10) zum Herstellen insbesondere von zwei Lagerbahnen, die die Berührungspunkte von Lagerkugeln auf seinem Ring beschreiben und die auf den Flanken, die sich unter Bildung einer Rille gegenüberliegen, deren Profil im Querschnitt einem V ähnlich ist, angeordnet sind, dadurch gekennzeichnet, daß es mindestens zwei bewegliche Elemente (10a, 10b, 10c) enthält, die bei einer Verbindung eine kreisförmige Öffnung begrenzen, daß ein Querschnitt in einer Mittelebene ein konvexes Profil darstellt, das mit Flanken zu deren Oberflächenbearbeitung im Gebiet der Bahnen zusammenarbeitet, und daß sich auf jedem der beweglichen Elemente in Nähe der Berührungsebene ein Vorsprung (40) befindet, der in Richtung auf den Mittelpunkt auf demjenigen Teil des Profils vorspringt, das zur Oberflächenbearbeitung des Gebietes der Bahnen bestimmt ist.

## FIG.1

## FIG.7

## FIG.8

## FIG.2

## FIG.4

FIG.3

FIG.6

FIG.5

2